# EUROPÄISCHE PATENTSCHRIFT

(11) **EP 3 910 314 B1**
(45) Veröffentlichungstag und Bekanntmachung des Hinweises auf die Patenterteilung: **20.07.2022**
(21) Anmeldenummer: 20174707.8
(22) Anmeldetag: 14.05.2020
(51) Int. Cl.: G01N 13/02, G01B 11/245

(54) **VERFAHREN UND VORRICHTUNG ZUR ANALYSE DER WECHSELWIRKUNG ZWISCHEN EINER OBERFLÄCHE EINER PROBE UND EINER FLÜSSIGKEIT**
METHOD AND DEVICE FOR ANALYSING THE INTERACTION BETWEEN A SURFACE OF A SAMPLE AND A LIQUID
PROCÉDÉ ET DISPOSITIF D'ANALYSE DE L'INTERACTION ENTRE UNE SURFACE D'UN ÉCHANTILLON ET UN LIQUIDE

(43) Veröffentlichungstag der Anmeldung: 17.11.2021
(73) Patentinhaber: KRÜSS GmbH, Wissenschaftliche Laborgeräte, 22453 Hamburg (DE)
(72) Erfinder: STÜVEN, Tim Kristjan, 20251 Hamburg (DE); FRIEDRICH, Bernd, 25474 Hasloh (DE); BUCHHOLZ, Alexander, 22846 Nordersted (DE); JÖNSSON, Marlitt, 20099 Hamburg (DE); WESER, Florian, 22453 Hamburg (DE)
(74) Vertreter: Hauck Patentanwaltspartnerschaft mbB

(56) Entgegenhaltungen:
- DE-A1-102017 007 301
- JP-A- 2007 132 929
- KR-A- 20160 117 206
- US-A1- 2017 103 280
- US-B2- 9 423 245

## Beschreibung

Die Erfindung betrifft ein Verfahren und eine Vorrichtung zur Analyse der Wechselwirkung zwischen einer Oberfläche einer Probe und einer Flüssigkeit, bei dem ein Tropfen der Flüssigkeit auf die Probenoberfläche aufgebracht und vermessen wird. Derartige Verfahren geben Aufschluss über die Oberflächeneigenschaften der Probe, weil diese Eigenschaften die Wechselwirkung mit der aufgebrachten Flüssigkeit bestimmen.

Eine in diesem Zusammenhang häufig verwendete Angabe, die die Oberflächeneigenschaften charakterisiert, ist der sogenannte Kontaktwinkel, der sich im Kontakt mit einer definierten Testflüssigkeit einstellt. Zur Bestimmung des Kontaktwinkels ist beispielsweise aus der Druckschrift DE 197 54 765 C1 ein Verfahren bekannt geworden, bei dem aus seitlicher Blickrichtung ein Schattenbild des Tropfens aufgenommen wird. In dem Schattenbild ist die Kontur des Tropfens sowie die Grenzfläche zur Probe erkennbar, sodass der Kontaktwinkel dem Schattenbild direkt entnommen werden kann. Die Grenzfläche und Tropfenkontur sind in dem Schattenbild jedoch nicht immer deutlich erkennbar, was zu Ungenauigkeiten führen kann. Zudem ist eine automatisierte Auswertung nur bedingt möglich. Um zuverlässige Ergebnisse zu erzielen, ist in der Regel eine erfahrene Bedienperson erforderlich.

Bei einem anderen bekannten Verfahren wird der Kontaktwinkel eines Tropfens auf Grundlage eines bekannten Volumens des Tropfens und eines mit einer Kamera von oben erfassten Durchmessers des Tropfens berechnet. Für die exakte Bestimmung des Durchmessers muss der Abstand zwischen Kamera und Tropfen bekannt sein. Zudem ergeben sich relativ große Fehler bei großen Kontaktwinkeln, weil sich der Durchmesser des Tropfens bei großen Kontaktwinkeln nur geringfügig mit dem Kontaktwinkel ändert.

Aus der Druckschrift EP 2 093 557 B1 ist ein anderes Verfahren zur Bestimmung des Kontaktwinkels bekannt geworden, bei dem der Tropfen ebenfalls von oben mit einer Kamera betrachtet wird. In einem seitlichen Abstand von einer optischen Achse der Kamera, auf der sich der Tropfen befinden muss, sind zwei Lichtquellen angeordnet. Mit der Kamera werden Bilder der Lichtreflexe der Lichtquellen erfasst. Ausgewertet wird der Abstand der zugehörigen Bildpunkte von der optischen Achse oder voneinander. Bei bekanntem Abstand zur Probenoberfläche kann aus dieser Abstandsinformation der Radius des Tropfens berechnet werden. Die exakte Anordnung des Tropfens bzw. der Probenoberfläche relativ zum Messsystem muss jedoch bekannt sein.

Aus der Druckschrift JP 2007132929 A sind Verfahren zur Bestimmung des Volumens von Tintentropfen bekannt geworden. Die Tintentropfen werden von einer Dosiereinheit in eine Tropfenaufnahme dosiert, anschließend wird die Tropfenaufnahme mit dem Tropfen zu einer Beobachtungseinheit transportiert.

Aus der Druckschrift KR 2016 0117206 A ist ebenfalls ein Verfahren zur Bestimmung des Volumens eines Tintentropfens bekannt geworden.

Die Druckschrift DE 10 2017 007 301 A1 beschreibt ein Verfahren, mit dem ein Kontaktwinkel eines Wassertropfens auf einer Oberfläche einer Frucht bestimmt werden kann, um mit Tensiden und Pestiziden behandelte Früchte von unbehandelten Früchten zu unterscheiden. Es wird ein Konzept erwähnt, um die Krümmung und den Kontaktwinkel des Tropfens mittels Reflexpunkten zu bestimmen.

Davon ausgehend ist es die Aufgabe der Erfindung, ein Verfahren zur Analyse der Wechselwirkung zwischen einer Oberfläche einer Probe und einer Flüssigkeit zur Verfügung zu stellen, das besonders flexibel und einfach angewendet werden kann, sowie eine entsprechende Vorrichtung.

Diese Aufgabe wird gelöst durch das Verfahren zur Bestimmung einer Größeninformation eines Tropfens (T) gemäß Anspruch 1 und durch das Verfahren zur Bestimmung einer Position eines Tropfens (T) gemäß Anspruch 3. Vorteilhafte Ausgestaltungen sind in den sich anschließenden Unteransprüchen angegeben. Beide Verfahren weisen die folgenden Schritte auf:
a) Aufbringen eines Tropfens einer Flüssigkeit auf eine Probenoberfläche,
b) Beleuchten des Tropfens mit mehreren Lichtquellen, die in einer Umgebung des Tropfens jeweils an einer Lichtquellenposition angeordnet sind,
c) Erfassen von Lichtreflexen der Lichtquellen, die von dem Tropfen ausgehen, mit einer Kamera, wobei für jeden erfassten Lichtreflex eine Sensorposition auf einem Sensor der Kamera ermittelt wird,
d) Zuordnen einzelner Lichtquellenpositionen zu einzelnen Sensorpositionen, so dass Paare aus jeweils einer Sensorposition und einer zugehörigen Lichtquellenposition vorliegen,
e) Berechnen einer Position bzw. einer Größeninformation des Tropfens aus den Paaren.

Das Aufbringen des Tropfens auf die Probenoberfläche kann auf beliebige Art und Weise geschehen, insbesondere mit einer geeigneten Dosiereinrichtung. Beispielswiese kann der Tropfen an einer Kanüle hängend ausgebildet und durch Absenken der Kanüle bis nahe an die Probenoberfläche heran auf der Probenoberfläche abgesetzt werden. Anschließend kann die Kanüle zurückgezogen werden. Ebenfalls bekannt ist das Aufbringen des Tropfens mit einem Flüssigkeitsstrahl, wie in der Druckschrift EP 2 899 528 B1 der Anmelderin beschrieben. Das Volumen des aufgebrachten Tropfens liegt typischerweise im Bereich von 0,1 µl bis 20 µl, häufig bei etwa 1 µl.

In einem weiteren Verfahrensschritt wird der Tropfen mit mehreren Lichtquellen beleuchtet. Jede der Lichtquellen befindet sich an einer bestimmten Lichtquellenposition, die Anordnung der Lichtquellen relativ zur Kamera ist also bekannt. Alle Lichtquellen sind in einer Umgebung des Tropfens angeordnet, insbesondere so, dass das von den Lichtquellen ausgehende Licht auf den Tropfen fällt. Die Abstände der Lichtquellen von dem Tropfen hängen von der Position des Tropfens ab. Sie können etwa gleich groß sein oder variieren. Typischerweise liegen die Abstände in einem Bereich von 1 mm bis 50 mm.

Die Lichtquellen können auf unterschiedliche Art und Weise realisiert werden, beispielsweise mit annähernd punktförmigen Lichtquellen oder unter Verwendung großflächiger Lichtquellen in Verbindung mit geeigneten Blenden. Auch die Verwendung von großflächigen Leuchtschirmen mit gezielter Ansteuerung einzelner Pixel oder Gruppen von einzelnen Pixeln ist möglich. Für die Erzeugung der Lichtreflexe kommt es lediglich darauf an, dass jede Lichtquelle eine begrenzte räumliche Ausdehnung hat und zu allen Seiten von dunklen Bereichen umgeben ist. Die Lichtquellen müssen auch in einem räumlichen Abstand voneinander angeordnet sein, um klar voneinander unterscheidbar zu sein. Unter diesen Voraussetzungen entstehen durch Reflexion an der Oberfläche des Tropfens Lichtreflexe, die als klar abgegrenzte beleuchtete Bereiche auf dem Sensor abgebildet werden, sodass für jeden in die Auswertung einzubeziehenden Lichtreflex eine Sensorposition ermittelt werden kann.

In einem weiteren Verfahrensschritt werden Lichtreflexe der Lichtquellen, die von dem Tropfen ausgehen, mit einer Kamera erfasst. Die Kamera weist einen Sensor auf. Beispielsweise kann es sich um eine CCD-Kamera handeln. Die Kamera hat überdies eine Optik, mit der das von der Kamera erfasste Blickfeld auf den Sensor abgebildet wird. Voraussetzung für das Entstehen der Lichtreflexe ist, dass die Tropfenoberfläche das von den Lichtquellen einfallende Licht zumindest teilweise reflektiert. Dies ist bei den meisten Flüssigkeiten gegeben, insbesondere bei den üblicherweise zur Charakterisierung von Proben eingesetzten Testflüssigkeiten. Als Testflüssigkeit kann wahlweise eine transparente Flüssigkeit oder eine intransparente, z.B. eingefärbte Flüssigkeit verwendet werden.

Für jeden erfassten Lichtreflex kann eine Sensorposition ermittelt werden. Diese besteht zum Beispiel aus zweidimensionalen Koordinaten der Abbildung des Lichtreflexes auf der Sensorfläche. Abhängig von der Geometrie der Lichtquelle, ihrer Anordnung und ihrer Helligkeitsverteilung sowie den Reflexionseigenschaften und den geometrischen Eigenschaften der Tropfenoberfläche kann das Bild eines Lichtreflexes auf dem Sensor annähernd punktförmig oder mehr oder weniger ausgedehnt sein. Erstreckt es sich über mehrere Bildpunkte des Sensors, kann die Sensorposition, die der weiteren Auswertung zugrunde gelegt wird, aus der Helligkeitsverteilung berechnet werden, beispielsweise als diejenige des hellsten Bildpunkts oder eines Schwerpunkts oder eines Mittelpunkts der Helligkeitsverteilung.

Somit liegen nach dem Erfassen der Lichtreflexe mehrere Sensorpositionen vor, die jeweils einen der erfassten Lichtreflexe beschreiben. Es versteht sich, dass weitere Lichtreflexe auftreten können, die auf den Sensor abgebildet, jedoch nicht in die Auswertung einbezogen werden. Zu diesen weiteren Lichtreflexen werden nicht notwendigerweise Sensorpositionen ermittelt.

Im nächsten Schritt werden dann einzelne Lichtquellenpositionen einzelnen Sensorpositionen zugeordnet. Durch die Zuordnung entstehen Paare von Sensorpositionen und zugehörigen Lichtquellenpositionen. Diese sind für die weitere Auswertung wichtig, weil sie Rückschlüsse auf die Tropfenoberfläche, an der das von der betreffenden Lichtquelle reflektierte Licht reflektiert wird, zulassen. Die Zuordnung der Lichtquellen zu den einzelnen Sensorpositionen kann auf unterschiedliche Art und Weise erfolgen, nachfolgend werden mehrere Beispiele diskutiert werden.

Hinsichtlich der Anzahl von Lichtquellen und Lichtreflexen bietet das Verfahren unterschiedliche Möglichkeiten. Grundsätzlich sind für die im Schritt e) vorgenommene Berechnung mindestens zwei Paare von Sensorpositionen und zugehörigen Lichtquellenpositionen erforderlich. Die Genauigkeit kann jedoch erhöht werden, wenn eine größere Anzahl von Paaren verwendet wird, beispielsweise mindestens drei Paare, mindestens vier Paare, mindestens fünf Paare oder mindestens zehn Paare. Dies ist einerseits möglich durch Vergrößerung der Anzahl der Lichtquellen, also beispielsweise unter Verwendung von mehr als zwei Lichtquellen, insbesondere von drei, vier, fünf oder mehr als fünf Lichtquellen. Eine andere Möglichkeit besteht in der Verwendung zusätzlicher Kameras. Werden beispielsweise die Lichtreflexe von zwei Lichtquellen mit zwei Kameras erfasst, stehen insgesamt vier Paare von Sensorpositionen und zugehörigen Lichtquellenpositionen für die weitere Auswertung zur Verfügung.

Im letzten Verfahrensschritt werden aus den Paaren eine Position und eine Größeninformation des Tropfens berechnet. Die Position kann beispielsweise ein Mittelpunkt des Tropfens sein, die Größeninformation beispielsweise ein Radius des Tropfens. Je nachdem, welche Geometrie der Tropfen aufweist oder welches mathematische Modell für die Geometrie des Tropfens zugrunde gelegt wird, kann die Größeninformation jedoch auch eine andere Größe sein, die die Oberflächengeometrie des Tropfens beschreibt, beispielsweise eine Halbachse einer Ellipse, ein Durchmesser, ein Volumen, eine Höhe oder eine sonstige, beispielsweise aus diesen Größen abgeleitete Größe, die die Gestalt des Tropfens beschreibt.

Welche Rechenschritte für das Berechnen von Position und Größeninformation des Tropfens im Einzelnen ausgeführt werden, hängt unter anderem von der Anzahl der verwendeten Lichtquellen und ihrer Anordnung sowie von den herangezogenen mathematischen Modellen für die Tropfengeometrie ab. Einige Beispiele für mögliche Berechnungsweisen werden nachfolgend noch im Einzelnen erläutert. Zentrale Gemeinsamkeit des Berechnungsschritts ist, dass auf Grundlage der Paare sowohl die Position des Tropfens als auch die Größeninformation berechnet werden kann. Grundlage hierfür ist die im vorhergehenden Verfahrensschritt getroffene Zuordnung einzelner Lichtquellenpositionen zu einzelnen Sensorpositionen. Es kann also allein anhand der erfassten Lichtreflexe sowohl die Anordnung des Tropfens relativ zu dem Messsystem als auch die gewünschte Größeninformation ermittelt werden. Dies ist ein wesentlicher Vorteil des Verfahrens, denn abweichend von den aus dem Stand der Technik bekannten Verfahren muss weder der Abstand des Messsystems von der Probenoberfläche noch die Anordnung des Tropfens relativ zu dem Messsystem, beispielsweise mit Bezug auf eine optische Achse der Kamera, exakt kontrolliert werden. Das Verfahren kann daher wesentlich flexibler ausgeführt werden, insbesondere mit Blick auf unregelmäßig gestaltete Probenoberflächen. Fehlerquellen, die sich bei den aus dem Stand der Technik bekannten Messverfahren aus einer fehlerhaften Positionierung des Tropfens ergeben, sind von vornherein ausgeschlossen. Auch die Anforderungen an das Aufbringen des Tropfens sind daher geringer und können gegebenenfalls auch von Personal mit weniger spezialisierten Fachkenntnissen erfüllt werden.

Ein weiterer Vorteil des Verfahrens ist, dass die Auswertung weitgehend automatisiert ablaufen kann. Eine manuelle Ausführung oder Kontrolle einzelner Auswertungsschritte ist nicht erforderlich. Das Verfahren kann daher besonders einfach ausgeführt werden.

In einer Ausgestaltung sind die Lichtquellen von diskreten Leuchtmitteln gebildet. Die Leuchtmittel können beispielsweise LEDs sein. Jedes Leuchtmittel ist an einer definierten Lichtquellenposition befestigt. Wie bereits erwähnt, ist die Ausführung der Lichtquellen grundsätzlich auf vielfältige Art und Weise möglich, auch unter Verwendung von großflächigen Leuchtschirmen, von denen einzelne Teilbereiche die Lichtquellen bilden. In diesem Fall ergibt sich die exakte Anordnung der Lichtquellen aus der Ansteuerung des Leuchtschirms. Die Verwendung diskreter Leuchtmittel ist jedoch besonders einfach und kann Lichtquellen mit relativ großer Lichtstärke und scharf abgegrenzten Helligkeitsverteilungen bereitstellen.

In einer Ausgestaltung wird anhand der Lichtquellenpositionen ein Template erstellt, das die erwarteten Sensorpositionen der Lichtreflexe beschreibt, wobei im Schritt d) ein Vergleich der erfassten Lichtreflexe mit dem Template erfolgt. Die Lichtquellenpositionen in Relation zur Kamera sind bekannt. Zur Erzeugung eines Templates kann beispielsweise unter der Annahme, dass ein typischer Tropfen an einer typischen Position angeordnet ist, ein Bild berechnet werden, das dem Kamerabild entspricht. Dieses berechnete Bild ist ein Template, das die erwarteten Sensorpositionen der Lichtreflexe beschreibt. Wird später bei der Ausführung des Verfahrens ein Kamerabild eines realen Tropfens erfasst, kann dieses in einem Template-Matching-Schritt mit dem Template verglichen werden, um die erfassten Lichtreflexe bzw. die zugehörigen Sensorpositionen den einzelnen Lichtquellenpositionen zuzuordnen. Diese Vorgehensweise ist in der Praxis sehr hilfreich, weil die real erfassten Kamerabilder häufig Lichtreflexe zeigen, die nicht oder nicht ausschließlich von der Oberfläche des Tropfens stammen. Dies gilt insbesondere bei der Verwendung von Proben mit spiegelnd reflektierenden Oberflächen oder bei der Verwendung einer transparenten Flüssigkeit. Besonders komplexe Reflexionen entstehen bei Verwendung einer transparenten Flüssigkeit auf einer spiegelnd reflektierenden Probenoberfläche. In diesem Fall können in den Tropfen eindringende Lichtstrahlen an einer Grenzfläche des Tropfens, insbesondere zwischen der Probe und dem Tropfen, reflektiert werden, gegebenenfalls auch mehrfach. Es entstehen Kamerabilder, die auch bei Verwendung einer geringen Anzahl von Lichtquellen zahlreiche Lichtreflexe zeigen. Die Zuordnung der tatsächlich von der Oberfläche des Tropfens stammenden Lichtreflexe zu den einzelnen Lichtquellenpositionen kann dann durch die Verwendung eines Templates wesentlich erleichtert werden.

In einer Ausgestaltung werden die Schritte b) und c) wiederholt für einzelne Lichtquellen und/oder unterschiedliche Gruppen einzelner Lichtquellen ausgeführt. Durch diese Maßnahme kann ebenfalls die Zuordnung der erfassten Lichtreflexe zu den Lichtquellenpositionen vereinfacht werden, weil zu einem bestimmten Zeitpunkt nur die Lichtreflexe einzelner Lichtquellen oder Gruppen einzelner Lichtquellen, nicht jedoch von allen Lichtquellen, erfasst werden. Für die aufeinanderfolgenden Ausführungen der Schritte b) und c) können die einzelnen Lichtquellen aktiviert und deaktiviert werden, insbesondere durch Ein- und Ausschalten.

In einer Ausgestaltung ist eine einzelne Lichtquelle in mindestens zwei der unterschiedlichen Gruppen einzelner Lichtquellen enthalten. Durch Vergleichen der von den beiden unterschiedlichen Gruppen einzelner Lichtquellen erfassten Kamerabilder kann dann relativ einfach festgestellt werden, welche Lichtreflexe von der Lichtquelle stammen, die in beiden unterschiedlichen Gruppen enthalten ist.

Bei dem Verfahren zur Bestimmung einer Größeninformation des Tropfens werden im Schritt e) für die Paare jeweils eine Vielzahl von Normalenvektoren berechnet, die mögliche Anordnungen eines reflektierenden Oberflächenbereichs beschreiben. Die spiegelnde Reflexion an der Oberfläche des Tropfens erfolgt nach dem Grundsatz "Einfallswinkel gleich Ausfallswinkel" symmetrisch zu einem Normalenvektor auf die Oberfläche. Die Richtung des einfallenden Lichtstrahls kann aus der Sensorposition berechnet werden, indem der zugehörige Sichtstrahl der Kamera verfolgt wird. Da der Abstand der Oberfläche von der Kamera jedoch nicht bekannt ist, kann auch bei bekannter Position der zu dem Lichtreflex gehörenden Lichtquellenposition die genaue Anordnung der spiegelnden Oberfläche nicht bestimmt werden. Es ist jedoch möglich, eine Vielzahl von Normalenvektoren anzugeben, die jeweils zu einem möglichen Abstand der spiegelnden Oberfläche gehören und die Spiegelung des Lichtstrahls an diesem Punkt beschreiben. Es kann also zu jedem Paar eine Vielzahl von Normalenvektoren berechnet werden, die jeweils eine mögliche Anordnung eines reflektierenden Oberflächenbereichs beschreiben. Wird diese Berechnung für mehrere Paare durchgeführt, kann anhand der Vielzahl von entlang der einzelnen Sichtstrahlen angeordneten Normalenvektoren eine Oberflächengeometrie bestimmt werden, die mit allen erfassten Paaren vereinbar ist. Diese Oberflächengeometrie führt dann zu der Größeninformation des Tropfens.

Bei dem Verfahren zur Bestimmung einer Größeninformation des Tropfens wird im Schritt e) in einem Optimierungsprozess eine angenommene Tropfenoberfläche variiert und mit den für die Paare berechneten Normalenvektoren verglichen. Beispielsweise können für jede angenommene Tropfenoberfläche Normalenvektoren auf der Tropfenoberfläche an den Schnittpunkten mit den Sichtstrahlen berechnet werden. In dem Optimierungsverfahren wird dann die Abweichung der Normalenvektoren auf der angenommene Tropfenoberfläche von den aus den Paaren berechneten, die Reflexion beschreibenden Normalenvektoren minimiert. Auf diese Weise kann die tatsächliche Tropfenoberfläche identifiziert werden. Dieser Optimierungsprozess kann sehr genaue Ergebnisse liefern. Werden hinsichtlich der Tropfenoberfläche sinnvolle Annahmen getroffen, konvergiert der Optimierungsprozess sehr schnell. Die Annahmen können die Position des Tropfens sowie die Geometrie der Tropfenoberfläche bestimmende Parameter umfassen, beispielsweise einen Mittelpunkt des Tropfens und einen Radius des Tropfens bei angenommener Kugelform. Unter Umständen noch genauere Ergebnisse können erzielt werden, wenn von einer Kugelform abweichende Annahmen über die Geometrie des Tropfens getroffen werden, insbesondere unter Berücksichtigung einer Verformung der Tropfengeometrie aufgrund der Schwerkraft. Beispielsweise kann ein elliptisch geformter Tropfen angenommen werden.

Bei dem Verfahren zur Bestimmung einer Position des Tropfens werden im Schritt e) zur Berechnung der Position des Tropfens Schnittpunkte von Ebenen berechnet, die jeweils eine Lichtquellenposition und einen Sichtstrahl der Kamera umfassen, der der zu der Lichtquellenposition zugehörigen Sensorposition entspricht. Anhand eines Paares, also einer Lichtquellenposition und einer zugehörigen Sensorposition, kann eine Ebene berechnet werden, die einen Sichtstrahl der Kamera sowie die Lichtquellenposition umfasst. Diese Ebene wird aufgespannt durch einen Vektor entlang des Sichtstrahls und einen Vektor von der Kamera zu der Lichtquellenposition. Die Ebene enthält zudem den Punkt auf der Tropfenoberfläche, an dem der erfasste Lichtreflex durch Reflexion einer Tropfenoberfläche entstanden ist. Der Normalenvektor auf die Tropfenoberfläche an diesem Punkt liegt ebenfalls in der berechneten Ebene. Jedenfalls bei annähernd kugelförmiger Geometrie des Tropfens befindet sich dann auch der Mittelpunkt des Tropfens, der entlang der von dem Normalenvektor auf die Tropfenoberfläche beschriebenen Gerade liegt, innerhalb der berechneten Ebene. Können mehrere solcher Ebenen berechnet werden, ergibt sich aus dem Schnittpunkt der Ebenen daher der Mittelpunkt des Tropfens, also dessen Position. Auf diese Wiese kann die Position des Tropfens unter Umständen besonders einfach ermittelt werden. Eine Optimierungsrechnung oder bestimmte Annahmen zur Anordnung des Tropfens sind nicht erforderlich.

In einer Ausgestaltung wird in einem weiteren Berechnungsschritt auf Grundlage der im Schritt e) berechneten Größen ein Kontaktwinkel des Tropfens berechnet. Geht man beispielsweise von einem kugelförmigen Tropfen und einer im Bereich des Tropfens ebenen Probenoberfläche aus, kann der Kontaktwinkel beispielsweise auf Grundlage des Mittelpunkts des Tropfens und einer Größeninformation in Form des Radius des Tropfens berechnet werden. Je nach den getroffenen Annahmen oder der angestrebten Genauigkeit können weitere als bekannt angenommene oder messtechnisch erfasste Größen in die Berechnung des Kontaktwinkels einfließen, insbesondere ein Volumen des Tropfens, das beim Aufbringen des Tropfens durch entsprechend genaue Dosierung vorgegeben werden kann, oder ein Abstand zwischen der Probenoberfläche und der Messanordnung.

In einer Ausgestaltung werden im Schritt c) weitere Lichtreflexe der Lichtquellen, die von dem Tropfen ausgehen, mit einer weiteren Kamera erfasst, wobei für jeden weiteren Lichtreflex eine Sensorposition auf einem Sensor der weiteren Kamera ermittelt wird. Wie bereits erwähnt, kann auf diese Weise unter Verwendung einer weiteren Kamera oder gegebenenfalls auch von mehr als zwei weiteren Kameras eine größere Anzahl von Paaren aus Sensorpositionen und Lichtquellenpositionen in die Auswertung einfließen. Dadurch kann eine größere Genauigkeit und/oder höhere Zuverlässigkeit der Auswertung erzielt werden. Ein besonderer Vorteil ergibt sich bei der beschriebenen Berechnung der Tropfenposition anhand von Ebenen, die jeweils eine Lichtquellenposition und einen Sichtstrahl umfassen, weil bei der Verwendung mehrerer Kameras Ebenen mit stärker voneinander abweichenden Winkelstellungen in die Auswertung einbezogen werden können.

In einer Ausgestaltung weisen die Kamera und die weitere Kamera Blickrichtungen auf, die sich um einen Winkel von 10° oder mehr voneinander unterscheiden. Der Winkelunterschied kann zum Beispiel 15° oder mehr, 20° oder mehr oder auch 30° oder mehr betragen. Durch diese Anordnung der beiden Kameras kann ebenfalls die Genauigkeit und/oder die Zuverlässigkeit der Auswertung verbessert werden.

In einer Ausgestaltung weisen die Lichtquellen eine regelmäßige Anordnung um den Tropfen herum auf. Grundsätzlich können die Lichtquellen in beliebiger Art und Weise um den Tropfen herum angeordnet werden. Eine regelmäßige Anordnung kann jedoch dazu beitragen, klar unterscheidbare Lichtreflexe zu erfassen. Insbesondere kann durch die regelmäßige Anordnung die Zuordnung der Lichtquellenposition zu den Lichtreflexen vereinfacht werden, unter anderem durch die Verwendung eines Templates, wie vorstehend erläutert.

In einer Ausgestaltung deckt die Anordnung der Lichtquellen von dem Tropfen aus betrachtet einen Raumwinkel im Bereich von π/8 sr bis 2 π sr ab. Der größte angegebene Raumwinkel von 2 π sr entspricht einer Halbkugel. Grundsätzlich ist es wünschenswert, Lichtreflexe von möglichst weit voneinander entfernten Punkten auf der Kugeloberfläche zu erfassen. Dies gelingt umso besser, je größer der von der Anordnung der Lichtquellen abgedeckte Raumwinkelbereich ist. Das theoretische Optimum des Bereichs hängt allerdings vom Kontaktwinkel ab. Bei sehr kleinen Kontaktwinkeln führen zu große Winkelabstände zwischen den einzelnen Lichtquellen schnell dazu, dass nicht mehr von jeder Lichtquelle ein Lichtreflex erfasst werden kann. Versuche haben ergeben, dass der genannte Raumwinkelbereich für die meisten Anwendungen besonders zweckmäßig ist.

In einer Ausgestaltung weisen die Lichtquellen erste Lichtquellen und zweite Lichtquellen auf, wobei die ersten Lichtquellen kleiner und/oder in kleineren Abständen voneinander angeordnet sind als die zweiten Lichtquellen. Die Abstände voneinander, in denen die Lichtquellen angeordnet sind, beziehen sich insbesondere auf die Winkelabstände, betrachtet von dem Tropfen aus. Die Verwendung unterschiedlicher Lichtquellen ist insbesondere im Zusammenhang mit unterschiedlichen Kontaktwinkeln hilfreich. Bei kleinen Kontaktwinkeln weisen die Tropfen relativ große Krümmungsradien auf. Es kann dann nur ein relativ kleines Feld von Lichtquellen durch spiegelnde Reflexion an der Tropfenoberfläche auf den Sensor der Kamera abgebildet werden. In dieser Situation ist eine Auswertung der von den ersten Lichtquellen stammenden Lichtreflexe zweckmäßig. Bei großen Kontaktwinkeln weist der Tropfen einen relativ kleinen Krümmungsradius auf und durch spiegelnde Reflexion an der Tropfenoberfläche wird ein größerer Winkelbereich um den Tropfen herum auf den Sensor der Kamera abgebildet. Dies macht eine Verwendung der zweiten Lichtquellen besonders zweckmäßig. Insgesamt kann durch die Verwendung unterschiedlicher Lichtquellen eine zweckmäßige Anpassung des Verfahrens an die jeweilige Messaufgabe erreicht werden.

Die oben angegebene Aufgabe wird ebenfalls gelöst durch die Vorrichtung zur Bestimmung einer Größeninformation eines Tropfens mit den Merkmalen des Anspruchs 12 und durch die Vorrichtung zur Bestimmung einer Position eines Tropfens mit den Merkmalen des Anspruchs 14. Beide Vorrichtungen weisen folgendes auf:
- eine Einrichtung zum Aufbringen eines Tropfens einer Flüssigkeit an einem Aufbringungsort auf eine Probenoberfläche,
- mehrere Lichtquellen, die in einer Umgebung des Aufbringungsorts jeweils an einer Lichtquellenposition angeordnet sind,
- eine Kamera mit einem Sensor, die auf den Aufbringungsort gerichtet und dazu ausgebildet ist, Lichtreflexen der Lichtquellen, die von einem aufgebrachten Tropfen ausgehen, zu erfassen, und
- eine elektronischen Auswerteeinrichtung, die dazu ausgebildet ist,
   (i.) für jeden erfassten Lichtreflex eine Sensorposition auf dem Sensor der Kamera zu ermitteln,
   (ii.) einzelne Lichtquellenpositionen einzelnen Sensorpositionen zuzuordnen, so dass Paare aus jeweils einer Sensorposition und einer zugehörigen Lichtquellenposition vorliegen, und
   (iii.) eine Position bzw. eine Größeninformation eines aufgebrachten Tropfens aus den Paaren zu berechnen.

Die Vorrichtungen sind insbesondere bestimmt zur Ausführung eines Verfahrens gemäß einem oder mehreren der Ansprüche 1 bis 11. Die Auswerteeinrichtung ist mit der Kamera und gegebenenfalls mit einer weiteren Kamera oder mehrere weiteren Kameras verbunden. Die Auswerteeinrichtung kann außerdem mit den Lichtquellen verbunden und insbesondere dazu ausgebildet sein, diese einzeln und/oder in Gruppen zu aktivieren und zu deaktivieren oder ein- und auszuschalten. Eine Anpassung der Vorrichtung an die vorstehend beschriebenen Ausgestaltungen des Verfahrens wird durch eine zu den jeweiligen Verfahrensmerkmalen korrespondierende Ausgestaltung der Vorrichtungsmerkmale erzielt, insbesondere also durch eine entsprechende Ausbildung der Auswerteeinrichtung. Zu den Merkmalen und Vorteilen der Vorrichtung wird auf die vorstehenden Erläuterungen des Verfahrens verwiesen, die entsprechend gelten.

Nachfolgend wird die Erfindung anhand von in Figuren dargestellten Ausführungsbeispielen näher erläutert. Es zeigen:
- Fig. 1: eine Vorrichtung zur Analyse der Wechselwirkung zwischen einer Oberfläche einer Probe und einer Flüssigkeit in einer schematischen Darstellung,
- Fig. 2: ein Template,
- Fig. 3: ein von einer Kamera der Vorrichtung erfasstes Bild, schematisch vereinfacht dargestellt, und
- Fig. 4: eine weitere Vorrichtung zur Analyse der Wechselwirkung zwischen einer Oberfläche einer Probe und einer Flüssigkeit in einer schematischen Darstellung in einer Ansicht von oben.

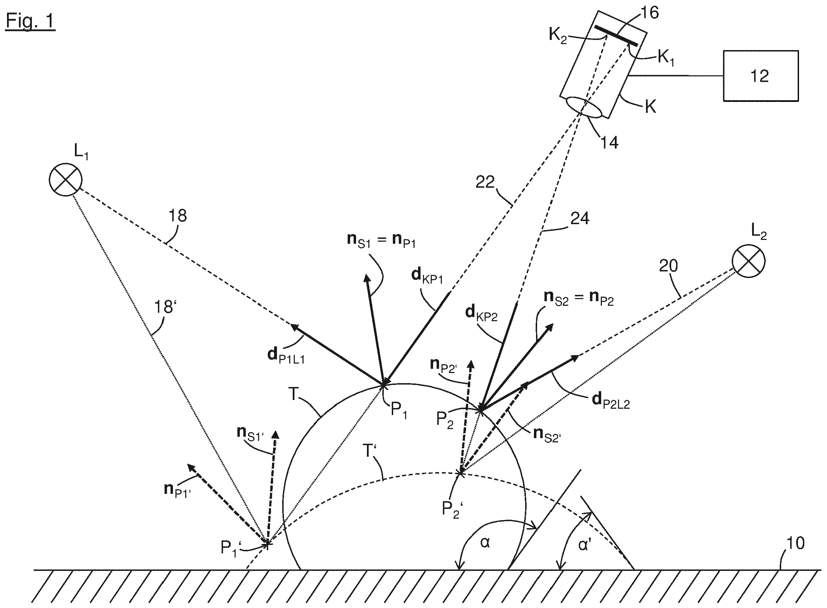

Figur 1 zeigt am unteren Bildrand eine schraffiert dargestellte Probe mit einer Probenoberfläche 10. Auf der Probenoberfläche befindet sich ein Tropfen T einer transparenten Flüssigkeit. Der Tropfen T ist annähernd kugelförmig und liegt unter Ausbildung eines Kontaktwinkels α auf der Probenoberfläche 10 auf. Er wurde mit einer geeigneten Dosiervorrichtung auf die Probenoberfläche 10 aufgebracht.

Die Vorrichtung, mit der der Tropfen T vermessen wird, weist zwei Lichtquellen L₁ und L₂ auf, die sich jeweils an einer Lichtquellenposition, die nachfolgend ebenfalls als L₁ bzw. als L₂ bezeichnet werden, befinden. Außerdem umfasst die Vorrichtung eine Kamera K und eine mit der Kamera verbundene Auswerteeinrichtung 12. Die Kamera K befindet sich relativ zu den beiden Lichtquellen L₁ und L₂ an einer fest vorgegebenen Position, die nachfolgend ebenfalls als K bezeichnet wird. Die Auswerteeinrichtung 12 kann insbesondere ein in die Vorrichtung integrierter Mikrorechner oder ein externer Computer sein, der mit den übrigen Elementen der Vorrichtung, die zu einem Messkopf zusammengefasst sein können, gekoppelt ist. Die Kamera K weist eine Optik 14 und einen Sensor 16 auf, der eine Sensorfläche hat, auf die ein Blickfeld der Kamera K mit der Optik 14 abgebildet wird.

Die beiden Lichtquellen L₁ und L₂ sind so angeordnet, dass sie eine Oberfläche des Tropfens T beleuchten. Ein von der Lichtquelle L₁ ausgehender Lichtstrahl 18 trifft dabei auf einen Punkt P₁ auf der Oberfläche des Tropfens T, wo er spiegelsymmetrisch zu einem Normalenvektor **n**_{P1} reflektiert wird. Das an dem Punkt P₁ reflektierte, von der Lichtquelle L₁ stammende Licht wird auf den Punkt K₁ des Sensors 16 abgebildet. Die Kamera K erfasst also an der Sensorposition K₁ einen Lichtreflex der Lichtquelle L₁. In gleicher Weise erfasst die Kamera K an der Sensorposition K₂ einen Lichtreflex der Lichtquelle L₂. Die Spiegelung des zugehörigen, von der Lichtquelle L₂ stammenden Lichtstrahls 20 erfolgt am Punkt P₂ der Oberfläche des Tropfens T, und zwar spiegelsymmetrisch zu dem Normalenvektor **n**_{P2}.

Anhand eines einzelnen Lichtreflexes und der zugehörigen Sensorposition kann der zugehörige Reflexionspunkt auf der Tropfenoberfläche in der Regel nicht bestimmt werden. Verfolgt man den zu der Sensorposition K₁ gehörenden Sichtstrahl 22 der Kamera, könnte das entlang dieses Sichtstrahls 22 an der Sensorposition K₁ auf den Sensor 16 auftreffende Licht nämlich nicht nur von dem Punkt P₁ stammen, sondern ebenso gut von jedem anderen Punkt auf dem Sichtstrahl, zum Beispiel von dem Punkt P_{1'}, falls an diesem Punkt eine durch den Normalenvektor **n**_{S1'} beschriebene, spiegelnd reflektierende Oberfläche vorhanden wäre. In diesem Fall wäre das von der Lichtquelle L₁ ausgehende Licht entlang eines Strahls 18' zu dem Punkt P₁' gelangt.

Diese Uneindeutigkeit kann beispielsweise dadurch aufgelöst werden, dass mehrere Paare aus Lichtquellenpositionen und Sensorpositionen in die Auswertung einbezogen und mit angenommenen Oberflächengeometrien abgeglichen werden. Dies ist in der Figur 1 veranschaulicht anhand einer angenommenen Oberfläche eines weiteren Tropfens T', die gestrichelt dargestellt ist. Die Richtung des Normalenvektors **n**_{P1'}, der die Ausrichtung der Oberfläche dieses Tropfens T' an dem Punkt P₁', an dem der Lichtstrahl 18' hätte reflektiert werden müssen, beschreibt, weicht jedoch erheblich von der Richtung des die Reflexion beschreibenden Einheitsvektors **n**_{S1'} ab. Diese Abweichung zeigt, dass das auf die Sensorposition K₁ auftreffende Licht tatsächlich nicht von der Oberfläche des angenommenen Tropfens T' stammen kann.

In der Figur 1 ist unter Verwendung entsprechender Bezeichnungen auch die hypothetische Situation einer Spiegelung der Lichtquelle L₂ an dem Punkt P₂' des angenommenen Tropfens T' dargestellt. Auch bei einer angenommenen Reflexion an diesem Punkt P₂' weicht der Normalenvektor **n**_{P2'} auf die Oberfläche des Tropfen T' am Schnittpunkt mit dem Sichtstrahl 24 von dem die theoretisch denkbare Spiegelung beschreibenden Einheitsvektor **n**_{S2}' erheblich ab. Dies zeigt, dass bei Verwendung einer hinreichenden Anzahl von Paaren K₁-L₁, K₂-L₂, ..., Kᵢ-Lᵢ aus einzelnen Sensorpositionen K₁, K₂, ..., Kᵢ und zugehörigen Lichtquellenpositionen L₁, L₂ , ..., Lᵢ berechnet werden kann, ob eine angenommene Tropfengeometrie mit den beobachteten Paaren in Einklang ist oder nicht. Auf diese Weise können die Position und eine Größeninformation des Tropfens beispielsweise in einem Optimierungsverfahren berechnet werden.

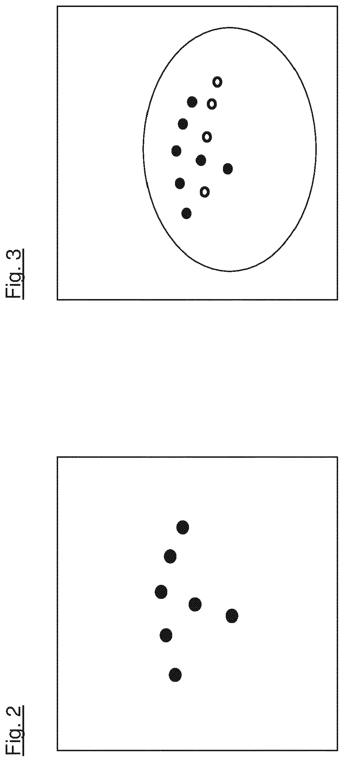

Für das Verfahren ist es wichtig, dass die Sensorpositionen K₁, K₂ der erfassten Lichtreflexe eindeutig den einzelnen Lichtquellenpositionen L₁, L₂ zugeordnet werden können. Hierzu veranschaulichen die Figuren 2 und 3 eine Zuordnung mithilfe eines Templates, das die erwarteten Sensorpositionen der Lichtreflexe beschreibt. Das Template zeigt sieben als ausgefüllte Kreise dargestellte Lichtreflexe, die von sieben Lichtquellen in einer bestimmten Anordnung hervorgerufen werden. Die in dem Template dargestellten Lichtreflexe ergeben sich bei Annahme einer Reflexion der von diesen Lichtquellen ausgehenden Lichtstrahlen an einem typischen Tropfen.

Figur 3 zeigt schematisch ein von einer Kamera K erfasstes Bild, in dem zur Veranschaulichung die Kontur eines Tropfens T dargestellt ist. Diese ist im realen Kamerabild unter Umständen gar nicht oder nur schwach erkennbar. Außerdem zeigt das Kamerabild insgesamt elf Lichtreflexe, von denen sieben als ausgefüllte Kreise dargestellt sind. Diese stammen von der Reflexion der sieben dem Template zugrunde liegenden Lichtquellen an dem Tropfen T. Ihre Anordnung ähnelt derjenigen aus dem Template der Figur 2, sodass durch einen Vergleich mit dem Template die von der Kamera erfassten Lichtreflexe, die in Figur 3 als ausgefüllte Kreise dargestellt sind, den einzelnen Lichtquellenpositionen zugeordnet werden können. Zusätzlich zeigt das Kamerabild der Figur 3 vier weitere, als nicht ausgefüllte Kreise dargestellte Lichtreflexe. Diese stammen entweder von weiteren Lichtquellen, die nicht in die Auswertung einbezogen werden sollen, oder entstehen durch störende Mehrfachreflexionen beispielsweise innerhalb des Tropfens oder an der Oberfläche der Probe. Sie haben keine Entsprechung in dem Template, sodass sie durch den Vergleich des Kamerabilds der Figur 3 mit dem Template der Figur 2 einfach als Störsignale identifiziert werden können.

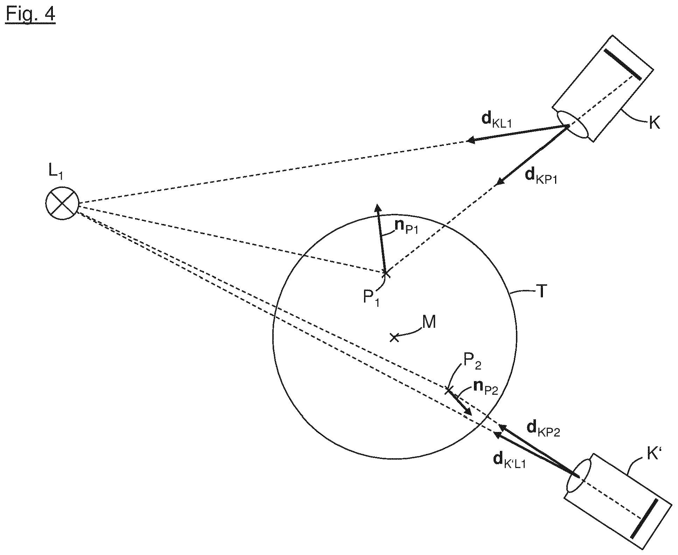

Figur 4 zeigt in einer schematischen Ansicht von oben eine weitere Vorrichtung zur Charakterisierung einer Oberfläche einer Probe, die zwei Kameras K und K' aufweist. Dargestellt ist in dieser Figur nur eine Lichtquelle L₁. Ebenfalls dargestellt ist ein Tropfen T mit einem Mittelpunkt M. In der Darstellung der Figur 4 ist der Blick ungefähr von oben auf die (nicht dargestellte) Probenoberfläche gerichtet, sodass der Tropfen T als Vollkreis erscheint. Zu der Kamera K ist ein Einheitsvektor **d**_{KL1} von der Kamera K zur Lichtquelle L₁ dargestellt, ebenso ein Einheitsvektor **d**_{KP1}, der dem Sichtstrahl der Kamera zu einem Reflexionspunkt P₁ auf der Oberfläche des Tropfens T entspricht. Die beiden Einheitsvektoren **d**_{KL1} und **d**_{KP1} spannen eine Ebene auf, die den Sichtstrahl der Kamera K und die Lichtquelle L₁ umfasst. In dieser Ebene liegt außerdem der Normalenvektor **n**_{P1} auf die Oberfläche des Tropfens T am Punkt P₁ sowie der Mittelpunkt M. Das gleiche gilt für die von den Einheitsvektoren **d**_{K'L1} und **d**_{K'P2} aufgespannte Ebene, sodass aus dem Schnitt der beiden Ebenen eine Linie bestimmt werden kann, die den Mittelpunkt M enthält. Bei der Verwendung mindestens einer weiteren Lichtquelle oder noch einer weiteren Kamera erhält man auf diese Weise drei Ebenen, die sich im Mittelpunkt M des Tropfens schneiden. Die Berechnung der Ebenen gibt daher Aufschluss über die Position des Tropfens T.

### Liste der Bezugszeichen

- 10: Probenoberfläche
- 12: Auswerteeinrichtung
- 14: Optik
- 16: Sensor
- 18: Lichtstrahl von L₁
- 20: Lichtstrahl von L₂
- 22: Sichtstrahl K₁
- 24: Sichtstrahl K₂
- K: Kamera
- K': weitere Kamera
- K₁: Sensorposition des Lichtreflexes von L₁
- K₂: Sensorposition des Lichtreflexes von L₂
- L₁: Lichtquelle
- L2: Lichtquelle
- P₁, P₂: Punkte auf der Oberfläche des Tropfens T
- T: Tropfen
- T': angenommener Tropfen
- P_{1'}, P_{2'}: Punkte auf der Oberfläche des angenommenen Tropfens T'
- M: Mittelpunkt
- α, α': Kontaktwinkel

## Patentansprüche

1. Verfahren zur Bestimmung einer Größeninformation eines Tropfens (T) zwecks Analyse der Wechselwirkung zwischen einer Oberfläche (10) einer Probe und einer Flüssigkeit, mit den folgenden Schritten:
a) Aufbringen eines Tropfens (T) einer Flüssigkeit auf eine Probenoberfläche (10),
b) Beleuchten des Tropfens (T) mit mehreren Lichtquellen (L₁, L₂), die in einer Umgebung des Tropfens (T) jeweils an einer Lichtquellenposition angeordnet sind,
c) Erfassen von Lichtreflexen der Lichtquellen (L₁, L₂), die von dem Tropfen (T) ausgehen, mit einer Kamera (K), wobei für jeden erfassten Lichtreflex eine Sensorposition (K₁, K₂) auf einem Sensor (16) der Kamera (K) ermittelt wird,
d) Zuordnen einzelner Lichtquellenpositionen zu einzelnen Sensorpositionen (K₁, K₂), so dass Paare aus jeweils einer Sensorposition (K₁, K₂) und einer zugehörigen Lichtquellenposition vorliegen, und
e) Berechnen einer Größeninformation des Tropfens (T) aus den Paaren, wobei für die Paare jeweils eine Vielzahl von entlang eines zugehörigen Sichtstrahls der Kamera (K) angeordneten Normalenvektoren (**n**) berechnet werden, die mögliche Anordnungen eines reflektierenden Oberflächenbereichs beschreiben, und wobei in einem Optimierungsprozess eine angenommene Tropfenoberfläche variiert und mit den für die Paare berechneten Normalenvektoren (n) verglichen wird.

2. Verfahren nach Anspruch 1, **dadurch gekennzeichnet, dass** zusätzlich aus den Paaren eine Position des Tropfens (T) berechnet wird, wobei für die Paare jeweils eine Vielzahl von entlang eines zugehörigen Sichtstrahls der Kamera (K) angeordneten Normalenvektoren (n) berechnet werden, die mögliche Anordnungen eines reflektierenden Oberflächenbereichs beschreiben, und wobei in einem Optimierungsprozess eine angenommene Tropfenoberfläche variiert und mit den für die Paare berechneten Normalenvektoren (n) verglichen wird.

3. Verfahren zur Bestimmung einer Position eines Tropfens (T) zwecks Analyse der Wechselwirkung zwischen einer Oberfläche (10) einer Probe und einer Flüssigkeit, mit den folgenden Schritten:
a) Aufbringen eines Tropfens (T) einer Flüssigkeit auf eine Probenoberfläche (10),
b) Beleuchten des Tropfens (T) mit mehreren Lichtquellen (L₁, L₂), die in einer Umgebung des Tropfens (T) jeweils an einer Lichtquellenposition angeordnet sind,
c) Erfassen von Lichtreflexen der Lichtquellen (L₁, L₂), die von dem Tropfen (T) ausgehen, mit einer Kamera (K), wobei für jeden erfassten Lichtreflex eine Sensorposition (K₁, K₂) auf einem Sensor (16) der Kamera (K) ermittelt wird,
d) Zuordnen einzelner Lichtquellenpositionen zu einzelnen Sensorpositionen (K₁, K₂), so dass Paare aus jeweils einer Sensorposition (K₁, K₂) und einer zugehörigen Lichtquellenposition vorliegen, und
e) Berechnen einer Position des Tropfens (T) aus den Paaren, wobei Schnittpunkte von Ebenen berechnet werden, die jeweils eine Lichtquellenposition und einen Sichtstrahl (22, 24) der Kamera (K) umfassen, der der zur der Lichtquellenposition zugehörigen Sensorposition (K₁, K₂) entspricht.

4. Verfahren nach Anspruch 3, **dadurch gekennzeichnet, dass** zusätzlich aus den Paaren eine Größeninformation des Tropfens (T) berechnet wird, wobei für die Paare jeweils eine Vielzahl von entlang eines zugehörigen Sichtstrahls der Kamera (K) angeordneten Normalenvektoren (n) berechnet werden, die mögliche Anordnungen eines reflektierenden Oberflächenbereichs beschreiben, und wobei in einem Optimierungsprozess eine angenommene Tropfenoberfläche variiert und mit den für die Paare berechneten Normalenvektoren (n) verglichen wird.

5. Verfahren nach einem der Ansprüche 1 bis 4, **dadurch gekennzeichnet, dass** die Lichtquellen (L₁, L₂) von diskreten Leuchtmitteln gebildet sind.

6. Verfahren nach einem der Ansprüche 1 bis 5, **dadurch gekennzeichnet, dass** anhand der Lichtquellenpositionen ein Template erstellt wird, das die erwarteten Sensorpositionen (K₁, K₂) der Lichtreflexe beschreibt, wobei im Schritt d) ein Vergleich der erfassten Lichtreflexe mit dem Template erfolgt.

7. Verfahren nach einem der Ansprüche 1 bis 6, **dadurch gekennzeichnet, dass** die Schritte b) und c) wiederholt für einzelne Lichtquellen (L₁, L₂) und/oder unterschiedliche Gruppen einzelner Lichtquellen (L₁, L₂) ausgeführt werden, wobei insbesondere eine einzelne Lichtquelle (K₁, K₂) in mindestens zwei der unterschiedlichen Gruppen einzelner Lichtquellen (K₁, K₂) enthalten ist.

8. Verfahren nach einem der Ansprüche 2 oder 4 bis 7, **dadurch gekennzeichnet, dass** in einem weiteren Berechnungsschritt auf Grundlage der im Schritt e) berechneten Größen ein Kontaktwinkel (a) des Tropfens (T) berechnet wird.

9. Verfahren nach einem der Ansprüche 1 bis 8, **dadurch gekennzeichnet, dass** im Schritt c) weitere Lichtreflexe der Lichtquellen, die von dem Tropfen (T) ausgehen, mit einer weiteren Kamera (K') erfasst werden, wobei für jeden weiteren Lichtreflex eine Sensorposition (K₁, K₂) auf einem Sensor (16) der weiteren Kamera (K') ermittelt wird.

10. Verfahren nach einem der Ansprüche 1 bis 9, **dadurch gekennzeichnet, dass** die Lichtquellen (L₁, L₂) eine regelmäßige Anordnung um den Tropfen (T) herum aufweisen, wobei insbesondere die Anordnung der Lichtquellen (L₁, L₂) von dem Tropfen (T) aus betrachtet einen Raumwinkel im Bereich von π/8 sr bis 2 π sr abdeckt.

11. Verfahren nach einem der Ansprüche 1 bis 10, **dadurch gekennzeichnet, dass** die Lichtquellen (L₁, L₂) erste Lichtquellen und zweite Lichtquellen aufweisen, wobei die ersten Lichtquellen kleiner und/oder in kleineren Abständen voneinander angeordnet sind als die zweiten Lichtquellen.

12. Vorrichtung zur Bestimmung einer Größeninformation eines Tropfens (T) zwecks Analyse der Wechselwirkung zwischen einer Oberfläche (10) einer Probe und einer Flüssigkeit, wobei die Vorrichtung folgendes aufweist:
• eine Einrichtung zum Aufbringen eines Tropfens (T) einer Flüssigkeit an einem Aufbringungsort auf eine Probenoberfläche (10),
• mehrere Lichtquellen (L₁, L₂), die in einer Umgebung des Aufbringungsorts jeweils an einer Lichtquellenposition angeordnet sind,
• eine Kamera (K) mit einem Sensor (16), die auf den Aufbringungsort gerichtet und dazu ausgebildet ist, Lichtreflexe der Lichtquellen (L₁, L₂), die von einem aufgebrachten Tropfen (T) ausgehen, zu erfassen, und
• eine elektronischen Auswerteeinrichtung, die dazu ausgebildet ist,
(i.) für jeden erfassten Lichtreflex eine Sensorposition (K₁, K₂) auf dem Sensor (16) der Kamera (K) zu ermitteln,
(ii.) einzelne Lichtquellenpositionen einzelnen Sensorpositionen (K₁, K₂) zuzuordnen, so dass Paare aus jeweils einer Sensorposition (K₁, K₂) und einer zugehörigen Lichtquellenposition vorliegen, und
(iii.) aus den Paaren eine Größeninformation des aufgebrachten Tropfens (T) zu berechnen, wobei für die Paare jeweils eine Vielzahl von entlang eines zugehörigen Sichtstrahls der Kamera (K) angeordneten Normalenvektoren **(n)** berechnet werden, die mögliche Anordnungen eines reflektierenden Oberflächenbereichs beschreiben, und wobei in einem Optimierungsprozess eine angenommene Tropfenoberfläche variiert und mit den für die Paare berechneten Normalenvektoren **(n)** verglichen wird.

13. Vorrichtung nach Anspruch 12, **dadurch gekennzeichnet, dass** die elektronische Auswerteeinrichtung dazu ausgebildet zusätzlich aus den Paaren eine Position des Tropfens (T) zu berechnen, wobei für die Paare jeweils eine Vielzahl von entlang eines zugehörigen Sichtstrahls der Kamera (K) angeordneten Normalenvektoren (n) berechnet werden, die mögliche Anordnungen eines reflektierenden Oberflächenbereichs beschreiben, und wobei in einem Optimierungsprozess eine angenommene Tropfenoberfläche variiert und mit den für die Paare berechneten Normalenvektoren (n) verglichen wird.

14. Vorrichtung zur Bestimmung einer Position eines Tropfens (T) zwecks Analyse der Wechselwirkung zwischen einer Oberfläche (10) einer Probe und einer Flüssigkeit, wobei die Vorrichtung folgendes aufweist:
• eine Einrichtung zum Aufbringen eines Tropfens (T) einer Flüssigkeit an einem Aufbringungsort auf eine Probenoberfläche (10),
• mehrere Lichtquellen (L₁, L₂), die in einer Umgebung des Aufbringungsorts jeweils an einer Lichtquellenposition angeordnet sind,
• eine Kamera (K) mit einem Sensor (16), die auf den Aufbringungsort gerichtet und dazu ausgebildet ist, Lichtreflexe der Lichtquellen (L₁, L₂), die von einem aufgebrachten Tropfen (T) ausgehen, zu erfassen, und
• eine elektronischen Auswerteeinrichtung, die dazu ausgebildet ist,
(i.) für jeden erfassten Lichtreflex eine Sensorposition (K₁, K₂) auf dem Sensor (16) der Kamera (K) zu ermitteln,
(ii.) einzelne Lichtquellenpositionen einzelnen Sensorpositionen (K₁, K₂) zuzuordnen, so dass Paare aus jeweils einer Sensorposition (K₁, K₂) und einer zugehörigen Lichtquellenposition vorliegen, und
(iii.) aus den Paaren eine Position des aufgebrachten Tropfens (T) zu berechnen, wobei Schnittpunkte von Ebenen berechnet werden, die jeweils eine Lichtquellenposition und einen Sichtstrahl (22, 24) der Kamera (K) umfassen, der der zur der Lichtquellenposition zugehörigen Sensorposition (K₁, K₂) entspricht.

15. Vorrichtung nach Anspruch 14, **dadurch gekennzeichnet, dass** die elektronische Auswerteeinrichtung dazu ausgebildet zusätzlich aus den Paaren eine Größeninformation des Tropfens (T) zu berechnen, wobei für die Paare jeweils eine Vielzahl von entlang eines zugehörigen Sichtstrahls der Kamera (K) angeordneten Normalenvektoren (n) berechnet werden, die mögliche Anordnungen eines reflektierenden Oberflächenbereichs beschreiben, und wobei in einem Optimierungsprozess eine angenommene Tropfenoberfläche variiert und mit den für die Paare berechneten Normalenvektoren (n) verglichen wird.

## Claims

1. A method for determining an item of size information of a drop (T) for analyzing the interaction between a surface (10) of a sample and a liquid, having the following steps:
a) applying a drop (T) of a liquid to a sample surface (10),
b) illuminating the drop (T) using several light sources (L₁, L₂) that are each arranged at a light source position in the surroundings of the drop (T),
c) detecting light reflections of the light sources (L₁, L₂) that emanate from the drop (T) using a camera (K), wherein a sensor position (K₁, K₂) on a sensor (16) of the camera (K) is determined for each detected light reflection,
d) assigning individual light source positions to individual sensor positions (K₁, K₂), such that pairs of one sensor position (K₁, K₂) and one associated light source position each are provided, and
e) calculating an item of size information of the drop (T) from the pairs, wherein a plurality of normal vectors (**n**) arranged along an associated eye ray of the camera (K) are calculated for the pairs that describe possible arrangements of a reflected surface region, and wherein an assumed drop surface is varied and compared with the normal vectors (**n**) calculated for the pairs in an optimization process.

2. The method according to claim 1, **characterized in that** a position of the drop (T) is also calculated from the pairs, wherein a plurality of normal vectors (n) arranged along an associated eye ray of the camera (K) are calculated for the pairs that describe possible arrangements of a reflected surface region, and wherein an assumed drop surface is varied and compared with the normal vectors (n) calculated for the pairs in an optimization process.

3. A method for determining a position of a drop (T) for analyzing the interaction between a surface (10) of a sample and a liquid, having the following steps:
a) applying a drop (T) of a liquid to a sample surface (10),
b) illuminating the drop (T) using several light sources (L₁, L₂) that are each arranged at a light source position in the surroundings of the drop (T),
c) detecting light reflections of the light sources (L₁, L₂) that emanate from the drop (T) using a camera (K), wherein a sensor position (K₁, K₂) on a sensor (16) of the camera (K) is determined for each detected light reflection,
d) assigning individual light source positions to individual sensor positions (K₁, K₂), such that pairs of one sensor position (K₁, K₂) and one associated light source position each are provided, and
e) calculating a position of the drop (T) from the pairs, wherein points of intersection of planes are calculated that each comprise a light source position and an eye ray (22, 24) of the camera that corresponds to the sensor position (K₁, K₂) associated with the light source position.

4. The method according to claim 3, **characterized in that** an item of size information of the drop (T) is also calculated from the pairs, wherein a plurality of normal vectors (n) arranged along an associated eye ray of the camera (K) are calculated for the pairs that describe possible arrangements of a reflected surface region, and wherein an assumed drop surface is varied and compared with the normal vectors (n) calculated for the pairs in an optimization process.

5. The method according to one of claims 1 to 4, **characterized in that** the light sources (L₁, L₂) are formed by discrete lamps.

6. The method according to one of claims 1 to 5, **characterized in that** a template that shows the expected sensor positions (K₁, K₂) of the light reflections is created based on the light source positions, wherein the detected light reflections are compared with the template in step d).

7. The method according to one of claims 1 to 6, **characterized in that** the steps b) and c) are repeated for individual light sources (L₁, L₂) and/or different groups of individual light sources (L₁, L₂), wherein in particular a single light source (K₁, K₂) is contained in at least two of the different groups of individual light sources (K₁, K₂).

8. The method according to one of claims 2 or 4 to 7, **characterized in that** a contact angle (α) of the drop (T) is calculated in an additional calculation step on the basis of the quantities calculated in step e).

9. The method according to one of claims 1 to 8, **characterized in that** additional light reflections of the light sources that emanate from the drop (T) are detected in step c) using an additional camera (K'), wherein a sensor position (K₁, K₂) on a sensor (16) of the additional camera (K') is determined for each additional light reflection.

10. The method according to one of claims 1 to 9, **characterized in that** the light sources (L₁, L₂) have a regular arrangement around the drop (T), wherein the arrangement of the light sources (L₁, L₂), viewed from the drop (T), covers a solid angle within a range of π/8 sr to 2 π sr.

11. The method according to one of claims 1 to 10, **characterized in that** the light sources (L₁, L₂) comprise first light sources and second light sources, wherein the first light sources are smaller and/or arranged at shorter distances from one another than the second light sources.

12. A device for determining an item of size information of a drop (T) for analyzing the interaction between a surface (10) of a sample and a liquid, wherein the device has the following:
• an apparatus for applying a drop (T) of a liquid at an application site on a sample surface (10),
• several light sources (L₁, L₂) that are each arranged at a light source position in the surroundings of the application site,
• a camera (K) that has a sensor (16) and is oriented toward the application site and is designed to detect light reflections of the light sources (L₁, L₂) that emanate from an applied drop (T), and
• an electronic evaluation apparatus designed to
(i.) determine a sensor position (K₁, K₂) on the sensor (16) of the camera (K) for each detected light reflection,
(ii.) assign individual light source positions to individual sensor positions (K₁, K₂), such that pairs of one sensor position (K₁, K₂) and one associated light source position each are provided, and
(iii.) calculate an item of size information of the applied drop (T) from the pairs, wherein a plurality of normal vectors (**n**) arranged along an associated eye ray of the camera (K) are calculated for the pairs that describe possible arrangements of a reflected surface region, and wherein an assumed drop surface is varied and compared with the normal vectors (**n**) calculated for the pairs in an optimization process.

13. The device according to claim 12, **characterized in that** the electronic evaluation apparatus is designed to additionally calculate a position of the drop (T) from the pairs, wherein a plurality of normal vectors (n) arranged along an associated eye ray of the camera (K) are calculated for the pairs that describe possible arrangements of a reflected surface region, and wherein an assumed drop surface is varied and compared with the normal vectors (n) calculated for the pairs in an optimization process.

14. A device for determining an item of size information of a drop (T) for analyzing the interaction between a surface (10) of a sample and a liquid, wherein the device has the following:
• an apparatus for applying a drop (T) of a liquid at an application site on a sample surface (10),
• several light sources (L₁, L₂) that are each arranged at a light source position in the surroundings of the application site,
• a camera (K) that has a sensor (16) and is oriented toward the application site and is designed to detect light reflections of the light sources (L₁, L₂) that emanate from an applied drop (T), and
• an electronic evaluation apparatus designed to
(i.) determine a sensor position (K₁, K₂) on the sensor (16) of the camera (K) for each detected light reflection,
(ii.) assign individual light source positions to individual sensor positions (K₁, K₂), such that pairs of one sensor position (K₁, K₂) and one associated light source position each are provided, and
(iii.) calculate a position of the applied drop (T) from the pairs, wherein points of intersection of planes are calculated that each comprise a light source position and an eye ray (22, 24) of the camera that corresponds to the sensor position (K₁, K₂) associated with the light source position.

15. The device according to claim 14, **characterized in that** the electronic evaluation apparatus is designed to additionally calculate an item of size information of the drop (T) from the pairs, wherein a plurality of normal vectors (n) arranged along an associated eye ray of the camera (K) are calculated for the pairs that describe possible arrangements of a reflected surface region, and wherein an assumed drop surface is varied and compared with the normal vectors (n) calculated for the pairs in an optimization process.

## Revendications

1. Procédé de détermination d'une information de taille d'une goutte (T) à des fins d'analyse de l'interaction entre une surface (10) d'un échantillon et un liquide, comprenant les étapes suivantes :
a) application d'une goutte (T) d'un liquide sur une surface d'échantillon (10),
b) éclairage de la goutte (T) avec plusieurs sources de lumière (L₁, L₂) disposées dans un environnement de la goutte (T) respectivement à un emplacement de source de lumière,
c) détection de reflets de lumière des sources de lumière (L₁, L₂) partant de la goutte (T), à l'aide d'une caméra (K), dans lequel un emplacement de capteur (K₁, K₂) est déterminé sur un capteur (16) de la caméra (K) pour chaque reflet de lumière détecté,
d) affectation de différents emplacements de source de lumière à différents emplacements de capteur (K₁, K₂), de manière à former des paires composées respectivement d'un emplacement de capteur (K₁, K₂) et d'un emplacement de source de lumière correspondant, et
e) calcul d'une information de taille de la goutte (T) à partir des paires, dans lequel une multitude de vecteurs normaux (**n**) disposés le long d'un rayon de visée correspondant de la caméra (K) sont calculés respectivement pour les paires, lesquels décrivent des agencements possibles d'une zone de surface réfléchissante, et dans lequel, au cours d'un processus d'optimisation, une surface de goutte supposée varie et est comparée avec les vecteurs normaux (**n**) calculés pour les paires.

2. Procédé selon la revendication 1, **caractérisé en ce que**
- un emplacement de la goutte (T) est en outre calculé à partir des paires, dans lequel une multitude de vecteurs normaux (n) disposés le long d'un rayon de visée correspondant de la caméra (K) sont calculés respectivement pour les paires, lesquels décrivent des agencements possibles d'une zone de surface réfléchissante, et dans lequel, au cours d'un processus d'optimisation, une surface de goutte supposée varie et est comparée avec les vecteurs normaux (n) calculés pour les paires.

3. Procédé de détermination d'un emplacement d'une goutte (T) à des fins d'analyse de l'interaction entre une surface (10) d'un échantillon et un liquide, comprenant les étapes suivantes :
a) application d'une goutte (T) d'un liquide sur une surface d'échantillon (10),
b) éclairage de la goutte (T) avec plusieurs sources de lumière (L₁, L₂) disposées dans un environnement de la goutte (T) respectivement à un emplacement de source de lumière,
c) détection de reflets de lumière des sources de lumière (L₁, L₂) partant de la goutte (T), à l'aide d'une caméra (K), dans lequel un emplacement de capteur (K₁, K₂) est déterminé sur un capteur (16) de la caméra (K) pour chaque reflet de lumière détecté,
d) affectation de différents emplacements de source de lumière à différents emplacements de capteur (K₁, K₂), de manière à former des paires composées respectivement d'un emplacement de capteur (K₁, K₂) et d'un emplacement de source de lumière correspondant, et
e) calcul d'un emplacement de la goutte (T) à partir des paires, dans lequel des points d'intersection de plans sont calculés, lesquels comportent respectivement un emplacement de source de lumière et un rayon de visée (22, 24) de la caméra (K), correspondant à l'emplacement de capteur (K₁, K₂) affecté à l'emplacement de source de lumière.

4. Procédé selon la revendication 3, **caractérisé en ce que**
- une information de taille de la goutte (T) est en outre calculée à partir des paires, dans lequel une multitude de vecteurs normaux (n) disposés le long d'un rayon de visée correspondant de la caméra (K) sont calculés respectivement pour les paires, lesquels décrivent des agencements possibles d'une zone de surface réfléchissante, et dans lequel, au cours d'un processus d'optimisation, une surface de goutte supposée varie et est comparée avec les vecteurs normaux (n) calculés pour les paires.

5. Procédé selon l'une des revendications 1 à 4, **caractérisé en ce que** les sources de lumière (L₁, L₂) sont formées par des moyens d'éclairage discrets.

6. Procédé selon l'une des revendications 1 à 5, **caractérisé en ce qu'**un modèle est créé à l'aide des emplacements de source de lumière, lequel décrit les emplacements de capteur (K₁, K₂) attendus des reflets de lumière, dans lequel, dans l'étape d), une comparaison est faite entre les reflets de lumière détectés et le modèle.

7. Procédé selon l'une des revendications 1 à 6, **caractérisé en ce que** les étapes b) et c) sont répétées pour différentes sources de lumière (L₁, L₂) et/ou sont exécutées pour des groupes distincts de différentes sources de lumière (L₁, L₂), dans lequel une seule source de lumière (K₁, K₂) est en particulier contenue dans au moins deux des groupes distincts de différentes sources de lumière (K₁, K₂).

8. Procédé selon l'une des revendications 2 ou 4 à 7, **caractérisé en ce que** dans une étape de calcul supplémentaire, un angle de contact (a) de la goutte (T) est calculé sur la base des tailles calculées dans l'étape e).

9. Procédé selon l'une des revendications 1 à 8, **caractérisé en ce que** dans l'étape c), des reflets de lumière supplémentaires des sources de lumière partant de la goutte (T) sont détectés à l'aide d'une caméra (K') supplémentaire, dans lequel, pour chaque reflet de lumière supplémentaire, un emplacement de capteur (K₁, K₂) est déterminé sur un capteur (16) de la caméra supplémentaire (K').

10. Procédé selon l'une des revendications 1 à 9, **caractérisé en ce que** les sources de lumière (L₁, L₂) présentent un agencement régulier autour de la goutte (T), dans lequel l'agencement des sources de lumière (L₁, L₂) couvre en particulier un angle spatial dans la plage de π/8 sr à 2 π sr, vu depuis la goutte (T).

11. Procédé selon l'une des revendications 1 à 10, **caractérisé en ce que** les sources de lumière (L₁, L₂) présentent des premières sources de lumière et des deuxièmes sources de lumière, dans lequel les premières sources de lumière sont plus petites et/ou disposées à des distances plus petites les unes par rapport aux autres que les deuxièmes sources de lumière.

12. Dispositif de détermination d'une information de taille d'une goutte (T) à des fins d'analyse de l'interaction entre une surface (10) d'un échantillon et un liquide, le dispositif comprenant :
• un système de dépôt d'une goutte (T) d'un liquide sur un site de dépôt sur une surface d'échantillon (10),
• plusieurs sources de lumière (L₁, L₂) disposées dans un environnement du site de dépôt, respectivement à un emplacement de source de lumière,
• une caméra (K) avec un capteur (16), laquelle est dirigée vers le site de dépôt et conçue pour détecter des reflets de lumière des sources de lumière (L₁, L₂) partant d'une goutte (T) déposée, et
• un système d'évaluation électronique conçu pour
(i) déterminer un emplacement de capteur (K₁, K₂) sur le capteur (16) de la caméra (K) pour chaque reflet de lumière détecté,
(ii) affecter différents emplacements de source de lumière à différents emplacements de capteur (K₁, K₂), de manière à former des paires composées respectivement d'un emplacement de capteur (K₁, K₂) et d'un emplacement de source de lumière correspondant, et
(iii) calculer un emplacement de la goutte (T) déposée à partir des paires, dans lequel une multitude de vecteurs normaux (**n**) disposés le long d'un rayon de visée correspondant de la caméra (K) sont calculés respectivement pour les paires, lesquels décrivent des agencements possibles d'une zone de surface réfléchissante, et dans lequel, au cours d'un processus d'optimisation, une surface de goutte supposée varie et est comparée avec les vecteurs normaux (**n**) calculés pour les paires.

13. Dispositif selon la revendication 12, **caractérisé en ce que** le système d'évaluation électronique est conçu pour calculer en outre un emplacement de la goutte (T) à partir des paires, dans lequel une multitude de vecteurs normaux (n) disposés le long d'un rayon de visée correspondant de la caméra (K) sont calculés respectivement pour les paires, lesquels décrivent des agencements possibles d'une zone de surface réfléchissante, et dans lequel, au cours d'un processus d'optimisation, une surface de goutte supposée varie et est comparée avec les vecteurs normaux (n) calculés pour les paires.

14. Dispositif de détermination d'un emplacement d'une goutte (T) à des fins d'analyse de l'interaction entre une surface (10) d'un échantillon et un liquide, le dispositif comprenant :
• un système de dépôt d'une goutte (T) d'un liquide sur un site de dépôt sur une surface d'échantillon (10),
• plusieurs sources de lumière (L₁, L₂) disposées dans un environnement du site de dépôt, respectivement à un emplacement de source de lumière,
• une caméra (K) avec un capteur (16), laquelle est dirigée vers le site de dépôt et conçue pour détecter des reflets de lumière des sources de lumière (L₁, L₂) partant d'une goutte (T) déposée, et
• un système d'évaluation électronique conçu pour
(i) déterminer un emplacement de capteur (K₁, K₂) sur le capteur (16) de la caméra (K) pour chaque reflet de lumière détecté,
(ii) affecter différents emplacements de source de lumière à différents emplacements de capteur (K₁, K₂), de manière à former des paires composées respectivement d'un emplacement de capteur (K₁, K₂) et d'un emplacement de source de lumière correspondant, et
(iii) calculer une information de taille de la goutte (T) déposée à partir des paires, dans lequel des points d'intersection de plans sont calculés, lesquels comportent respectivement un emplacement de source de lumière et un rayon de visée (22, 24) de la caméra (K), correspondant à l'emplacement de capteur (K₁, K₂) affecté à l'emplacement de source de lumière.

15. Dispositif selon la revendication 14, **caractérisé en ce que** le système d'évaluation électronique est conçu pour calculer en outre une information de taille de la goutte (T) à partir des paires, dans lequel une multitude de vecteurs normaux (n) disposés le long d'un rayon de visée correspondant de la caméra (K) sont calculés respectivement pour les paires, lesquels décrivent des agencements possibles d'une zone de surface réfléchissante, et dans lequel, au cours d'un processus d'optimisation, une surface de goutte supposée varie et est comparée avec les vecteurs normaux (n) calculés pour les paires.
